(19) Europäisches Patentamt / European Patent Office / Office européen des brevets

(11) **EP 2 283 572 B1**

(12) **EUROPÄISCHE PATENTSCHRIFT**

(45) Veröffentlichungstag und Bekanntmachung des Hinweises auf die Patenterteilung:
**12.07.2017 Patentblatt 2017/28**

(21) Anmeldenummer: **09765478.4**

(22) Anmeldetag: **11.05.2009**

(51) Int Cl.:
*H02P 21/00* *(2016.01)*

(86) Internationale Anmeldenummer:
**PCT/EP2009/003312**

(87) Internationale Veröffentlichungsnummer:
**WO 2009/152898 (23.12.2009 Gazette 2009/52)**

(54) **STEUER- ODER REGELVERFAHREN FÜR EINEN UMRICHTER**

OPEN-LOOP OR CLOSED-LOOP CONTROL METHOD FOR A CONVERTER

PROCÉDÉ DE COMMANDE OU DE RÉGULATION POUR UN CONVERTISSEUR

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **27.05.2008 DE 102008025408**

(43) Veröffentlichungstag der Anmeldung:
**16.02.2011 Patentblatt 2011/07**

(73) Patentinhaber: **SEW-EURODRIVE GmbH & Co. KG 76646 Bruchsal (DE)**

(72) Erfinder:
• **WOLF, Harald**
  **76698 Ubstadt-Weiher (DE)**
• **HAMMEL, Wolfgang**
  **76646 Bruchsal (DE)**

(56) Entgegenhaltungen:
**DE-A1- 19 756 955** **GB-A- 2 239 320**
**KR-A- 20030 022 607** **US-A1- 2002 195 986**
**US-B1- 6 448 735**

**Beschreibung**

Die Erfindung betrifft ein Steuer- oder Regelverfahren für einen Umrichter.

Zur dynamischen Regelung einer Drehfeldmaschine ist die Kenntnis der Richtung des Flussraumzeigers eine notwendige Voraussetzung. Im Falle einer Synchronmaschine steht die Richtung des Flussraumzeigers in einem festen Zusammenhang mit der Rotorstellung. Aus diesem Grund werden zur Regelung der Maschine meist Positionslagegeber verwendet, welche die Stellung des Rotors gegenüber dem Stator messen und an die Regelung im Umrichter übermitteln. Dieses Verfahren ist auch bei einer Asynchronmaschine anwendbar, indem neben der gemessenen Rotorstellung zusätzlich der Schlupfwinkel innerhalb der Regelung modelliert und zur Rotorstellung addiert wird. Somit ist auch hier die Richtung des Flussraumzeigers gegenüber dem Stator bekannt.

Nachteilig bei dieser Vorgehensweise ist die Notwendigkeit einen Positionslagegeber zu verwenden, da dieser erhöhte Kosten sowohl für den Lagegeber, die Verkabelung als auch die notwendige Auswertung im Umrichter verursacht.

Um auf den Positionslagegeber verzichten zu können ist es daher erforderlich, die Stellung des Flussraumzeigers aus den elektrischen Größen, welche dem Umrichter ohnehin zur Verfügung stehen zu bestimmen.

Es ist bekannt, dass sich der Rotorflusszeiger aus der Statorspannung und dem Statorstrom wie folgt bestimmen lässt

$$\underline{\Psi}_R = \int \left( \underline{u}_S - R_S \cdot \underline{i}_S \right) \cdot dt - L_S \cdot \underline{i}_S$$

Es ist also das zeitliche Integral der induzierten Spannung zu bilden. Hierzu ist das zeitliche Integral der an den Statorklemmen des Motors anliegenden Spannung abzüglich dem ohmschen Spannungsabfall an der Statorwicklung zu bilden und anschließend der durch den Statorstrom verursachte Flussanteil $L_S \cdot \underline{i}_S$ vom gebildeten Integral abzuziehen.

Problematisch hierbei ist, dass es sich bei dem zu bildenden Integral um eine offene Integration handelt, bei der auch bereits sehr kleine Offsets in der Erfassung der zu integrierenden Größen zu einem Wegdriften des Integrierergebnisses führen und somit eine mit der Zeit zunehmend falsche Modellbildung des Flussraumzeigers erfolgt.

Zur Umgehung dieses Problems wird in der Veröffentlichung "Hybrid Rotor Position Observer for Wide Speed-Range Sensorless PM Motor Drives Including Zero Speed", IEEE Transactions on Industrial Electronics, Vol. 53, No.2, April 2006 von C. Silva et al. ist ein Flusszeigerbeobachtermodell bekannt, der zur Verminderung oder Unterdrückung der Drift des Integriergliedes eine Rückführung verwendet, der das Ergebnis der Integration, also den Rotorflussraumzeiger über ein P-Glied zurückführt wird. Auf diese Weise wird ein Wegdriften des Integrierer-Inhaltes verhindert. Nachteilig an diesem Verfahren ist jedoch, dass der so ermittelte Modellwert des Flussraumzeigers bei abnehmenden Drehzahlen zunehmend vom tatsächlichen Flussraumzeiger des Motors abweicht. Das Verfahren ist daher nur in einem eingeschränkten Bereich, d.h. oberhalb einer gegebenen Grenzfrequenz verwendbar. Diese minimale nutzbare Grenzfrequenz hängt von der Wahl des Verstärkungsfaktors der Rückführung ab, die jedoch nicht wie gewünscht beliebig klein gewählt werden kann, da ansonsten die geforderte Unterdrückung des Wegdriftens nicht mehr gewährleistet ist. Die für eine wirksame Unterdrückung der Drift erforderliche Rückführung des Integrationsergebnisses erzeugt auch dann eine Verfälschung des beobachteten Flussraumzeigers, wenn die Offsets der Messsignale selbst verschwinden.

Aus der Veröffentlichung

1. Silva, C.; Araya, R.: "Sensorless Vector Control of Induction Machine with Low Speed Capability using MRAS with Drift and Inverter Nonlinearities Compensation" in EUROCON, 2007, The International Conference on "Computer as a Tool", 9-12 Sept. 2007, Pages: 1922 -1928

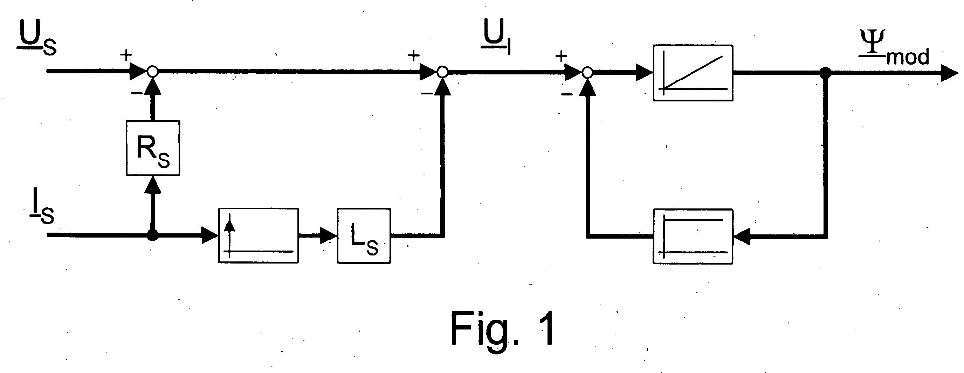

ist in Figur 1 im Kasten "flux estimator" ersichtlich, dass aus dem Integrationsergebnis der Betrag gebildet wird und dieser mit dem vorgegebenen Nennwert verglichen wird. Dabei wird also die Differenz der beiden Werte gebildet. Dies ist eine skalare Größe, also kein Differenzzeiger. Aus diesem skalaren Differenzwert wird nun ein Zeiger gebildet, dessen Richtung so gewählt wird, dass sie mit der Richtung des Integrationsergebnisses, also dem zu bildenden Modellwert, übereinstimmt und wobei der Betrag dieses Zeigers durch obigen skalaren Differenzwert bestimmt ist. Dieser Zeiger wird nun als Rückführgröße zur Stützung des Modellwertes verwendet. **Die Korrektur des Modellwertes erfolgt also immer nur in radialer Richtung, d.h. nur betragsverändernd und nicht winkelkorrigierend.** Es ist also klar, dass die Rückführgröße keinen wirklichen physikalischen Flussraumzeiger des Motors oder einen Differenzflussraumzeiger zur Korrektur des Flussraumzeiger-Modellwertes aufweist, weil die Richtung des Differenzflussraumzeigers aus dem driftenden Integrationsergebnis selbst bestimmt und somit fast nie korrekt ist. Im Falle der verschwindenden Drift des Integriergieds verschwindet zwar auch die rückgeführte Größe. Aber im Fall vorhandener Drift steht die Rückführgröße nicht senkrecht auf dem Motorspannungsraumzeiger. Somit ist die Rückführgröße nicht parallel zum physikalischen wirklichen Flussraumzeiger des Motors.

Der Erfindung liegt daher die Aufgabe zugrunde, ein Steuer- oder Regelverfahren für einen Umrichter weiterzubilden, wobei die Regelung verbessert werden soll, insbesondere die Regelgüte verbessert werden soll.

Dies wird erfihdungsgemäß durch ein Verfahren erreicht, das auch bei kleinen Frequenzen keine Verfälschung des Modellflussraumzeigers verursacht. Erfindungsgemäß wird die Aufgabe bei dem Steuer-oder Regelverfahren für einen Umrichter nach den im Anspruch 1 angegebenen Merkmalen gelöst.

Wichtige Merkmale bei dem Steuer- oder Regelverfahren für einen Umrichter, der einen Elektromotor speist, sind, dass als Motorstrom ein Stromraumzeiger erfasst wird und als Motorspannung ein Spannungsraumzeiger gestellt wird,

wobei ein induzierter Spannungsraumzeiger $\underline{U}_l$ bestimmt wird, der einem Integrierglied zugeführt wird,

am Integrierglied eine derartige Rückführung vorgesehen ist, dass bei verschwindender Drift des Integrationsergebnisses die Rückführungsgröße ebenfalls verschwindet.

Von Vorteil ist dabei, dass bei verschwindender Drift, also bezüglich der physikalischen wirklichen Werte möglichst korrektem Modellierungsergebnis die Rückführung verschwindet und somit keine prinzipbedingten Abweichungen erzeugt werden. Außerdem sind die sowieso schon bekannten Werte des Maschinenmodells samt Drehrichtungsinformation ausreichend als Eingangsgrößen für das erfindungsgemäße Verfahren.

Anders ausgedrückt sind bei der Erfindung weitere wichtige Merkmale bei dem Steuer- oder Regelverfahren für einen Umrichter, der einen Elektromotor speist, dass als Motorstrom ein Stromraumzeiger erfasst wird und als Motorspannung ein Spannungsraumzeiger gestellt wird,

wobei ein induzierter Spannungsraumzeiger $\underline{U}_l$ bestimmt wird, der einem Integrierglied zugeführt wird,

ein Flussraumzeiger erzeugt wird, dessen Winkellage senkrecht auf dem Spannungsraumzeiger steht,

wobei der Betrag des Flussraumzeigers einem vorgegebenen Nennwert entspricht,

die Differenz des Integrationsergebnisses und des so erzeugten Flussraumzeigers als Rückführung bei dem Integrationsglied verwendet wird.

Von Vorteil ist dabei, dass kein drehzahlabhängiger Fehler durch die Rückführung generiert wird sondern bei verschwindender Rückführung auch die Drift verschwindet. Außerdem ist vorteiligerweise auch eine sehr rauschbehaftete Größe als rückgeführte Größe verwendbar, die der Fachmann als Regelgröße eher vermeiden würde. Durch die Integration wird dieses Rauschen quasi geglättet und unterdrückt - ähnlich zu einem Tiefpass.

Bei der vorliegenden Erfindung wird also als Rückführgröße die vektorielle Differenz aus einem Referenz-Flussraumzeiger, der dem physikalischen Flussraumzeiger entspricht und dem Integrationsergebnis also dem Modellflussraumzeiger selbst, verwendet. Die Korrektur des Modellwertes kann daher in beliebiger Richtung erfolgen und wirkt daher nicht nur betragsverändernd sondern auch winkelkorrigierend. Entscheidend hierbei ist, dass der erfindungsgemäß verwendete Referenz-Flussraumzeiger mit dem tatsächlichen Maschinenflussraumzeiger sehr gut übereinstimmt, da seine Richtung aus der wirklichen Maschinenspannung gewonnen wird. Gleichzeitig wird diese Größe aber ohne Integration gewonnen und ist damit prinzipbedingt driftfrei.

Bei einer vorteilhaften Ausgestaltung wird die Differenz des Integrationsergebnisses und des so erzeugten Flussraumzeiger mit einem Faktor multipliziert und dem Integranden des Integrationsglied addiert oder subtrahiert wird. Von Vorteil ist dabei, dass mit dem Faktor die Wirkung der Rückführung verminderbar ist und somit die Drift des Integrationsgliedes langsam abgebaut wird.

Bei einer vorteilhaften Ausgestaltung wird der Betrag des Flussraumzeigers als für den Motor geltender Nennwert des Flusses gewählt, insbesondere wobei der Nennwert des Flusses bei Ausführung des Elektromotors als Synchronmotor durch die von den auf dem Rotor vorgesehenen Permanentmagneten bewirkte Magnetisierung erzeugt wird und bei Ausführung des Elektromotors als Asynchronmotor dem aufmagnetisierten Wert des Flusses entspricht. Von Vorteil ist dabei, dass der aus den Motordaten bekannte Wert verwendbar ist und somit die Bestimmung des Referenz-Flussraumzeigers in einfacher Weise ermöglicht ist.

Bei einer vorteilhaften Ausgestaltung ist die Winkellage des erzeugten Flussraumzeigers drehrichtungsabhängig +90° oder -90° zur Winkellage des Integranden, also des induzierten Spannungsraumzeigers, gewählt. Von Vorteil ist dabei, dass die Physik der Maschine idealisierend und somit einfach und schnell sowie mit wenig Rechenaufwand nachbildbar ist.

***Bei einer vorteilhaften Ausgestaltung befinden sich die Raumzeiger in einer Ebene, deren Normale in Achsrichtung ausgerichtet. Von Vorteil ist dabei, dass der Rechenaufwand niedrig ist.***

Bei einer vorteilhaften Ausgestaltung ist der Integrand als induzierte Spannung $\underline{U}_l = \underline{U}_S - R_S \cdot \underline{I}_S - L_S \cdot \dfrac{d\underline{I}_S}{dt}$. Von Vorteil ist dabei, dass ein bekanntes Maschinenmodell verwendbar ist für den Asynchronmotor und auch den Synchronmotor.

Bei einer vorteilhaften Ausgestaltung verschwindet bei verschwindender Drift des Integrationsergebnisses die Rückführungsgröße ebenfalls. Von Vorteil ist dabei, dass kein drehzahlabhängig Fehler vorhanden ist, der mit sinkender Drehzahl zunimmt.

Weitere Vorteile ergeben sich aus den Unteransprüchen.

Die Erfindung wird nun anhand von Abbildungen näher erläutert:

Der Umrichter umfasst einen aus dem ein- oder dreiphasigen Netz versorgten Gleichrichter, dessen unipolare Ausgangsspannung einem Glättungskondensator, dem sogenannten Zwischenkreiskondensator, zugeführt wird, aus dem drei, aus Leistungsschaltern gebildete Halbbrücken als Endstufe versorgt werden. Jede Halbbrücke umfasst eine Serienschaltung mindestens zweier Leistungsschalter, die jeweils pulsweitenmoduliert angesteuert werden. Die Ansteuersignale für die Schalter werden in einer elektronischen Schaltung, insbesondere also einer Signalelektronik, erzeugt, wobei diese mit Mitteln zum Erfassen des Motorstroms, also eines Stromraumzeigers, verbunden sind.

Hierzu werden die Ströme in den drei, den Motor versorgenden Phasenleitungen erfasst oder alternativ mittels eines oder mehrerer Shuntwiderstände der jeweilige in einer Halbbrücke fließende Strom. Zum Stellen der Motorspannung, also eines Spannungsraumzeigers, genügt es, den momentanen Wert der Zwischenkreisspannung zu erfassen, wobei mittels einer bestimmten Pulsweite der Spannungsraumzeiger, also die Motorspannung, stellbar ist. Somit ist also durch Stellen der Pulsweite unter Berücksichtigung der Zwischenkreisspannung die Motorspannung als Stellgröße verwendbar.

In der Signalelektronik wird ein Regelverfahren durchgeführt, wobei Modellwerte des aus dem Umrichter versorgten Elektromotors bestimmt werden, insbesondere auch der Statorfluss als Modellwert.

$$\underline{U}_I = \underline{U}_S - R_S \cdot \underline{i}_S - L_S \cdot \frac{d\underline{i}_S}{dt}$$ gebildet, wobei dieses Resultat integriert wird zur Bildung des Flusses Psi_mod. Hierbei ist zur Reduzierung der Drift des Integriergliedes eine Rückführung berücksichtigt, die einen zum Ergebnis des Integriergliedes proportionalen Fluss vom Eingang des Integriergliedes subtrahiert.

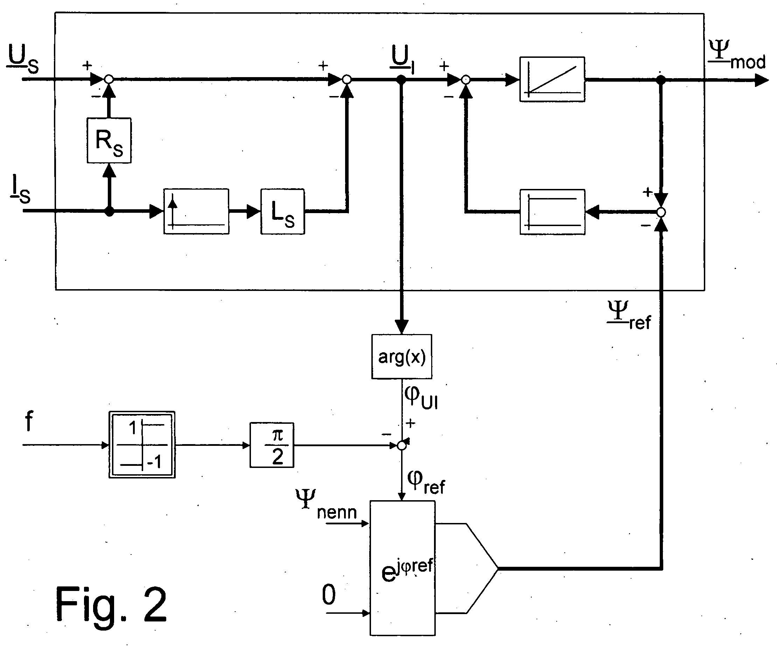

In der Figur 2 ist eine Weiterbildung zur Figur 1 gezeigt. Hierbei wird je nach Vorzeichen der Drehzahl, also drehrichtungsabhängig, $\frac{\pi}{2}$ addiert oder subtrahiert vom Wert des Arguments des Integranden $\underline{U}_I$, also von der Winkellage des induzierten Spannungsraumzeigers. Das Ergebnis dieser Operation ergibt einen Winkel $\varphi_{ref}$, zu dem ein Flussraumzeiger $\underline{\Psi}_{ref}$ gebildet wird, dessen Länge als der für den Motor geltende Nennwertes des Flusses festgelegt wird und dessen Winkellage der Winkellage $\varphi_{ref}$ entspricht. Bei Ausführung des Elektromotors als Synchronmotor ist dieser Nennwert mittels der auf dem Rotor befindlichen Permanentmagnete bekannt. Bei Ausführung des Elektromotors als Asynchronmotor ist dieser Nennwert nach Aufmagnetisierung des Rotors erreicht; nur während der Zeitdauer der Aufmagnetisierung oder bei sonstigen extrem dynamischen Vorgängen liegen Abweichungen zu diesem Wert vor.

Die Koordinatendarstellung in einem rotorflussorientierten Koordinatensystem ist in Figur 2 mit den Komponenten $\Psi_{Nenn}$ und 0 dargestellt. Der Raumzeiger des Flusses wird dann aber in einem statororientierten Koordinatensystem dargestellt und die zwei zugehörigen Komponenten als Rückführungsgröße zur Verminderung der Drift des Integriergliedes verwendet. Hierbei ist wichtig, dass die Differenz zwischen dem Flussraumzeiger $\underline{\Psi}_{ref}$ und dem Ausgang des Integriergliedes gebildet wird und mit einem Faktor multipliziert auf den Eingang des Integriergliedes geführt wird, also vom Integranden subtrahiert wird.

Wesentlicher Vorteil der Erfindung ist hierbei, dass die Rückführungsgröße genau dann verschwindet, wenn keine Drift des Integriergliedes vorhanden ist. Auf diese Weise wird durch die Rückführungsgröße keine fehlerhafte Abweichung im Integrationsergebnis erzeugt, insbesondere keine drehzahlabhängige Fehlergröße.

Wenn hingegen wie beim Stand der Technik das Integrationsergebnis über ein Übertragungsglied, wie beispielswiese ein P-Glied, rückgeführt wird, ergäbe sich ein mit kleiner werdenden Frequenzen zunehmender Fehler des Flusses $\underline{\Psi}_{mod}$ in seiner Phase. Somit entspricht die modellierte Größe des Flussraumzeigers bei kleiner werdenden Frequenzen immer weniger der realen physikalischen Größe des Flussraumzeigers im Motor.

Bei der Erfindung wird vorteiligerweise die auf den Integrierereingang rückgeführte Größe aus einem Vergleich zwischen dem integrierten Modellfluss $\underline{\Psi}_{mod}$ und einem Referenzfluss $\underline{\Psi}_{ref}$ gewonnen, wobei der Referenzfluss prinzipbedingt keiner Drift unterliegt. Außerdem wird der Referenzfluss aus sowieso vorhandenen Größen bestimmt. Dieser Referenzfluss stimmt seiner Natur nach mit dem tatsächlichen Flussraumzeiger in der Maschine überein, wodurch die Rückführung der Differenz zwischen dem integrierten Modellflussraumzeiger und dem Referenzflussraumzeiger keinen verfälschenden Einfluss auf den integrierten Modellfluss hat. Dies gilt auch dann wenn die Frequenz sehr klein wird.

Somit ist ein größerer Drehzahlbereich, insbesondere Richtung kleinerer Drehzahlen, verwendbar, da auch bei kleinsten Frequenzen eine im Wesentlichen korrekte Winkellage des Flussraumzeigers bestimmt wird.

In dieser Schrift werden unter "senkrecht" auch Winkel verstanden, die geringfügig von 90° abweichen. Je größer die Abweichung desto größer wird der Strom, der für ein gefordertes Drehmoment benötigt wird.

**Bezugszeichenliste**

$\underline{U}_I$ induzierter Spannungsraumzeiger
$\varphi_{ref}$ Winkellage des induzierten Spannungsraumzeigers
$\underline{\Psi}_{ref}$ Vergleichswert für den Flussraumzeiger, Referenzflussraumzeiger
$\Psi_{Nenn}$ Nennwert des Flusses

$\underline{\Psi}_{mod}$ Modellwert des Flussraumzeigers

**Patentansprüche**

1. Steuer- oder Regelverfahren für einen Umrichter, der einen Elektromotor speist,
   wobei als Motorstrom ein Stromraumzeiger erfasst wird und als Motorspannung ein Spannungsraumzeiger gestellt wird,
   **dadurch gekennzeichnet, dass**
   ein induzierter Spannungsraumzeiger

   $$\underline{U}_I = \underline{U}_S - R_S \cdot \underline{I}_S - L_S \cdot \frac{d\underline{I}_S}{dt}$$ bestimmt wird, der als erster Anteil einem Integrierglied zugeführt wird,
   wobei aus dem induzierten Spannungsraumzeiger ein Flussraumzeiger erzeugt wird, dessen Winkellage senkrecht auf dem Spannungsraumzeiger steht und dessen Betrag einem vorgegebenen Nennwert entspricht, aus dem mit Hilfe des induzierten Spannungsraumzeigers $\underline{U}_I$ ein Referenzflussraumzeiger $\underline{\Psi}_{ref}$ gebildet wird,
   wobei die Differenz aus dem Integrationsergebnis und dem Referenzflussraumzeiger $\underline{\Psi}_{ref}$ als Rückführung für das Integrationsglied verwendet wird, indem die Differenz mit einem Faktor multipliziert wird und als zweiter Anteil dem Integrierglied zugeführt wird,
   wobei der Integrand des Integrationsglieds aus der Differenz zwischen erstem und zweiten Anteil besteht,
   insbesondere wobei die Winkellage des erzeugten Flussraumzeigers drehrichtungsabhängig vor- oder nacheilend zur Winkellage des Integranden gewählt wird, also +90° oder -90° zur Winkellage des Integranden.

2. Steuer- oder Regelverfahren nach Anspruch 1 für einen Umrichter, der einen Elektromotor speist
   wobei als Motorstrom ein Stromraumzeiger erfasst wird und als Motorspannung, ein Spannungsraumzeiger gestellt wird,
   **dadurch gekennzeichnet, dass**
   ein induzierter Spannungsraumzeiger

   $$\underline{U}_I = \underline{U}_S - R_S \cdot \underline{I}_S - L_S \cdot \frac{d\underline{I}_S}{dt}$$ bestimmt wird, der - abzüglich eines Rückführanteils - einem Integrierglied zugeführt wird,
   am Integrierglied eine derartige Rückführung vorgesehen ist, dass bei verschwindender Drift des Integrationsergebnisses die Rückführungsgröße ebenfalls verschwindet,
   wobei das Integrationsergebnis des Integrierglieds mit einem Faktor multipliziert wird und als Rückführanteil verwendet wird.

3. Verfahren nach mindestens einem der vorangegangenen Ansprüche,
   **dadurch gekennzeichnet, dass**
   bei verschwindender Drift des Integrationsergebnisses die Rückführungsgröße ebenfalls verschwindet.

4. Verfahren nach mindestens einem der vorangegangenen Ansprüche,
   **dadurch gekennzeichnet, dass**
   die Differenz des Integrationsergebnisses und des so erzeugten Flussraumzeigers mit einem Faktor multipliziert wird und dem Integranden des Integrationsglieds addiert oder subtrahiert wird.

5. Verfahren nach mindestens einem der vorangegangenen Ansprüche,
   **dadurch gekennzeichnet, dass**
   der Betrag des Flussraumzeigers als für den Motor geltender Nennwert des Flusses gewählt wird, insbesondere wobei der Nennwert des Flusses bei Ausführung des Elektromotors als Synchronmotor durch die von den auf dem Rotor vorgesehenen Permanentmagneten bewirkte Magnetisierung erzeugt wird und bei Ausführung des Elektromotors als Asynchronmotor dem aufmagnetisierten Wert des Flusses entspricht.

6. Verfahren nach mindestens einem der vorangegangenen Ansprüche,
   **dadurch gekennzeichnet, dass**
   dieser Nennwert des Flusses so gewählt wird, dass er der in der übrigen Regelung des Umrichters verwendeten Flussvorgabe entspricht, insbesondere bei Ausführung des Elektromotors als Asynchronmotor.

7. Verfahren nach mindestens einem der vorangegangenen Ansprüche,
   **dadurch gekennzeichnet, dass**
   die Winkellage des erzeugten Flussraumzeigers drehrichtungsabhängig vor- oder nacheilend zur Winkellage des Integranden, also des induzierten Spannungsraumzeigers, gewählt ist, insbesondere also +90° oder -90° zur Winkellage des Integranden.

8. Verfahren nach mindestens einem der vorangegangenen Ansprüche,
   **dadurch gekennzeichnet, dass**
   die Raumzeiger in einer Ebene sich befinden, deren Normale in Achsrichtung ausgerichtet ist.

9. Verfahren nach mindestens einem der vorangegangenen Ansprüche,
   **dadurch gekennzeichnet, dass**
   der Integrand $\underline{U}_I = \underline{U}_S - R_S \cdot \underline{I}_S - L_S \cdot \frac{d\underline{I}_S}{dt}$ umfasst.

**Claims**

1.  Open-loop or closed-loop control method for a converter which supplies an electric motor,
    a current space vector being acquired as motor current and, as motor voltage, a voltage space vector being set,
    **characterised in that**
    an induced voltage space vector

    $\underline{U}_I = \underline{U}_S - R_S \cdot \underline{i}_S - L_S \cdot \dfrac{d\underline{i}_S}{dt}$ is determined, which is forwarded as first component to an integration element,
    a flux space vector being generated from the induced voltage space vector, whose angular position is perpendicular to the voltage space vector, and whose amount corresponds to a predefined nominal value, from which a reference flux space vector $\underline{\Psi}_{ref}$ is generated with the aid of the induced voltage space vector $\underline{U}_I$,
    the difference of the integration result and the reference flux space vector $\underline{\Psi}_{ref}$ thus being used as feedback for the integration element, by the difference being multiplied by a factor and forwarded as second component to the integration element,
    the integrand of the integration element consisting of the difference between first and second component,
    in particular the angular position of the generated flux space vector being selected as a function of the direction of rotation, leading or reactive to the angular position of the integrand, i.e., +90° or -90° to the integrand.

2.  Open-loop or closed-loop control method according to claim 1 for a converter which supplies an electric motor,
    a current space vector being acquired as motor current and, as motor voltage, a voltage space vector being set,
    **characterised in that**
    an induced voltage space vector

    $\underline{U}_I = \underline{U}_S - R_S \cdot \underline{i}_S - L_S \cdot \dfrac{d\underline{i}_S}{dt}$ is determined, which is forwarded - minus a feedback component - to an integration element,
    feedback is provided at the integration element, such that with vanishing drift of the integration result, the feedback quantity vanishes as well,
    the integration result of the integration element being multiplied by a factor and used as feedback component.

3.  Method according to at least one of the preceding claims,
    **characterised in that**
    with vanishing drift of the integration result, the feedback quantity vanishes as well.

4.  Method according to at least one of the preceding claims,
    **characterised in that**
    the difference of the integration result and the flux space vector generated is multiplied by a factor and added to or subtracted from the integrand of the integration element.

5.  Method according to at least one of the preceding claims,
    **characterised in that**
    the amount of the flux space vector is selected as a nominal value of flux applying to the motor, in particular the nominal value of flux being generated by the magnetization produced by permanent magnets provided on the rotor in implementation of the electric motor as an synchronous motor, and corresponding to the magnetized value of the flux in implementation of the electric motor as an asynchronous motor.

6.  Method according to at least one of the preceding claims,
    **characterised in that**
    this nominal value of the flux is selected to correspond to the flux specification used in regulation of the converter, in particular in implementation of the electric motor as an asynchronous motor.

7.  Method according to at least one of the preceding claims,
    **characterised in that**
    the angular position of the generated flux space vector is selected as a function of the direction of rotation, leading or reactive to the angular position of the integrand, i.e. of the induced voltage space vector, i.e. in particular +90° or -90° to the angular position of the integrand.

8.  Method according to at least one of the preceding claims,
    **characterised in that**
    the space vectors lie in a plane having a normal aligned in an axial direction.

9.  Method according to at least one of the preceding claims,
    **characterised in that**

    the integrand encompasses $\underline{U}_I = \underline{U}_S - R_S \cdot \underline{i}_S - L_S \cdot \dfrac{d\underline{i}_S}{dt}$.

**Revendications**

1.  Procédé de commande ou de régulation pour un variateur qui alimente un moteur électrique,

selon lequel un vecteur spatial de courant est détecté en tant que courant de moteur et un vecteur spatial de tension est posé en tant que tension de moteur, **caractérisé en ce**

**qu'**un vecteur spatial de tension induite $\underline{U}_I = \underline{U}_S - R_S \cdot \underline{I}_S - L_S \cdot d\underline{I}_S/dt$ est déterminé et amené à un élément d'intégration en tant que première composante,

un vecteur spatial de flux étant généré à partir du vecteur spatial de tension induite, dont la position angulaire est perpendiculaire au vecteur spatial de tension et dont la norme correspond à une valeur nominale prédéfinie, à partir de laquelle, à l'aide du vecteur spatial de tension induite $\underline{U}_I$, un vecteur spatial de flux de référence $\underline{\Psi}_{ref}$ est formé,

la différence entre le résultat d'intégration et le vecteur spatial de flux de référence $\underline{\Psi}_{ref}$ étant utilisée comme rétroaction pour l'élément d'intégration, en multipliant la différence par un facteur et en l'amenant à l'élément d'intégration en tant que deuxième composante, l'intégrande de l'élément d'intégration étant constitué de la différence entre la première et la deuxième composante,

en particulier la position angulaire du vecteur spatial de flux généré étant choisie, en fonction du sens de rotation, en avance ou en retard par rapport à la position angulaire de l'intégrande, donc à +90° ou -90° par rapport à la position angulaire de l'intégrande.

2. Procédé de commande ou de régulation selon la revendication 1 pour un variateur qui alimente un moteur électrique,

selon lequel un vecteur spatial de courant est détecté en tant que courant de moteur et un vecteur spatial de tension est posé en tant que tension de moteur, **caractérisé en ce**

**qu'**un vecteur spatial de tension induite $\underline{U}_I, = \underline{U}_S - R_S \cdot \underline{I}_S - L_S \cdot d\underline{I}_S/dt$ est déterminé qui - déduction faite d'une composante de rétroaction - est amené à un élément d'intégration,

une rétroaction est prévue sur l'élément d'intégration, telle qu'en cas de dérive infiniment petite du résultat d'intégration, la grandeur de rétroaction devient également infiniment petite,

le résultat d'intégration de l'élément d'intégration étant multiplié par un facteur et utilisé en tant que composante de rétroaction.

3. Procédé selon au moins l'une des revendications précédentes,
   **caractérisé en ce**
   **qu'**en cas de dérive infiniment petite du résultat d'intégration, la grandeur de rétroaction devient également infiniment petite.

4. Procédé selon au moins l'une des revendications précédentes,
   **caractérisé en ce**
   **que** la différence entre le résultat d'intégration et le vecteur spatial de flux ainsi généré est multipliée par un facteur et additionnée ou soustraite à l'intégrande de l'élément d'intégration.

5. Procédé selon au moins l'une des revendications précédentes,
   **caractérisé en ce**
   **que** la norme du vecteur spatial de flux est choisie comme valeur nominale du flux valable pour le moteur, en particulier la valeur nominale du flux étant, en cas de réalisation du moteur électrique comme moteur synchrone, générée par la magnétisation produite par les aimants permanents prévus sur le rotor et, en cas de réalisation du moteur électrique comme moteur asynchrone, correspondant à la valeur magnétisée du flux.

6. Procédé selon au moins l'une des revendications précédentes,
   **caractérisé en ce**
   **que** cette valeur nominale du flux est choisie de façon à ce qu'elle corresponde à la consigne de flux utilisée dans le reste de la régulation du variateur, en particulier en cas de réalisation du moteur électrique comme moteur asynchrone.

7. Procédé selon au moins l'une des revendications précédentes,
   **caractérisé en ce**
   **que** la position angulaire du vecteur spatial de flux généré est choisie, en fonction du sens de rotation, en avance ou en retard par rapport à la position angulaire de l'intégrande, en particulier donc à +90° ou -90° par rapport à la position angulaire de l'intégrande.

8. Procédé selon au moins l'une des revendications précédentes,
   **caractérisé en ce**
   **que** les vecteurs spatiaux se trouvent dans un plan dont la normale est orientée dans la direction de l'axe.

9. Procédé selon au moins l'une des revendications précédentes,
   **caractérisé en ce**
   **que** l'intégrande comprend $\underline{U}_I = \underline{U}_S - R_S \cdot \underline{I}_S - L_S \cdot d\underline{I}_S/dt$.

Fig. 1

EP 2 283 572 B1

Fig. 2

EP 2 283 572 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **VON C. SILVA.** Hybrid Rotor Position Observer for Wide Speed-Range Sensorless PM Motor Drives Including Zero Speed. *IEEE Transactions on Industrial Electronics,* April 2006, vol. 53 (2

- **SILVA, C. ; ARAYA, R.** Sensorless Vector Control of Induction Machine with Low Speed Capability using MRAS with Drift and Inverter Nonlinearities Compensation. *EUROCON, 2007, The International Conference on ''Computer as a Tool,* 09. September 2007, 1922-1928